# EUROPÄISCHE PATENTANMELDUNG

(11) **EP 1 394 647 A2**
(43) Veröffentlichungstag der Anmeldung: **03.03.2004**
(21) Anmeldenummer: 03015913.1
(22) Anmeldetag: 12.07.2003
(51) Int. Cl.: G05D 23/02

(54) **Stockwerkregulierventil für Warmwasser-Zirkulationssysteme**

(30) Priorität: 18.07.2002 DE 10232549
(71) Anmelder: Gebr. Kemper GmbH + Co. KG, 57462 Olpe (DE)
(72) Erfinder: Fries, Stefan, 57462 Olpe (DE)
(74) Vertreter: Pürckhauer, Rolf, Dipl.-Ing.

(57) **Zusammenfassung**

Das als Unterputzventil ausgebildete Stockwerkregulierventil für Warmwasser-Zirkulationssysteme umfaßt ein durch die Warmwassertemperatur geregeltes, voreinstellbares Regulieroberteil (2) und ein diesem nachgeschaltetes, manuell betätigtes Absperr- und/oder Regulieroberteil (3). Das Regulieroberteil (2) ist mit einem Ventileinsatz (9) ausgestattet, der ein Thermostatelement (10) zum Verstellen eines Regulierkolbens (11) mit einem Regulierkegel (15) aufweist, der mit einem einteilig mit dem zylindrischen Ventileinsatz (9) ausgebildeten Ventilsitzring (12) zur Regelung der Wasserdurchflußmenge zusammenwirkt. Des weiteren ist das Regulieroberteil (2) des Stockwerkregulierventils (1) mit einer Stellvorrichtung zur Voreinstellung des Regulierkolbens (11) zur Einstellung der Sollwert-Temperatur ausgestattet, bei der das Regulierventil einen minimalen Volumenstrom durchläßt.

## Beschreibung

Die Erfindung betrifft ein Stockwerkregulierventil für Warmwasser-Zirkulationssysteme, mit einem Ventilgehäuse, in das ein durch die Wassertemperatur gesteuertes Thermostatelement als Stellglied für ein Regelglied eingebaut ist, das mit einem Ventilsitz mit einer Durchflußöffnung zwischen Eingangs- und Ausgangskanal des Ventilgehäuses zur Regelung der Wasserdurchflußmenge zusammenwirkt, sowie mit einer Stellvorrichtung zur Voreinstellung des Regelgliedes (DE 298 05 921.5 U1).

In Wasserversorgungsanlagen mit großen Leitungslängen zwischen Warmwasserbereitungsgerät und Zapfstellen, beispielsweise in mehrstöckigen Gebäuden, wird parallel zu den einzelnen Steigleitungen eine Zirkulationsleitung verlegt, wobei die Zirkulationsleitung einerseits mit der Steigleitung und andererseits mit dem Warmwasserbereiter verbunden ist. Dadurch läßt sich eine Zirkulation des Warmwassers über den größten Teil der Versorgungsleitungen erzielen, so daß bei der Entnahme von Warmwasser aus der Warmwasserversorgungsanlage nur noch verhältnismäßig kleine Wassermengen ungenutzt durchlaufen müssen, bis das entnommene Wasser die gewünschte Temperatur aufweist.

Die nutzbare Warmwassertemperatur in Warmwasserversorgungsnetzen liegt bevorzugt in einem Bereich von ca. 50°C, was einerseits für die Anwendungszwecke, wie zum Beispiel Spülen, Waschen, Duschen völlig ausreichend ist und zum anderen den Forderungen der Energieeinsparverordnung Rechnung trägt. Zudem ist bei dieser Warmwassertemperatur in der Warmwasserversorgung ein Verbrühschutz an den Auslaufarmaturen überflüssig, da Temperaturen von 50°C noch keine ernsthaften Schädigungen der Haut der Benutzer hervorrufen können.

Allerdings stellen diese Warmwasserversorgungsanlagen Infektionsquellen für die sogenannte Legionärskrankheit dar, die insbesondere immungeschwächte ältere Menschen gefährdet, da sich die Erreger der Legionärskrankheit, die Legionellen, bei Temperaturen zwischen 35°C und 50°C sehr stark vermehren.

Die Sterilisierung der Bakterien beginnt ab ca. 60°C und die Absterbezeit verkürzt sich mit steigender Temperatur sehr stark. Bei ca. 60°C beträgt diese 30 Minuten, während bei 70°C Wassertemperatur die Absterbezeit nur wenige Sekunden beträgt. Oberhalb von 72°C kann von einer Zerstörung der Legionellen ausgegangen werden.

Die Vermehrung und das Überleben der Legionellen werden auch durch Stagnation des warmen Trinkwassers und durch die Anwesenheit von schlammigen Oberflächenbelägen (Biofilm) begünstigt.

Besonders stark wirkt sich dieses Problem in weitverzweigten Warmwasseranlagen aus, wie sie beispielsweise in Hotels, Krankenhäusern, Altenheimen, Schwimmbädern und ähnlichen Gebäuden existieren, wo immer wieder Warmwasserleitungen bzw. Leitungsteile bestehen, die über eine längere Zeitdauer nicht benutzt werden oder in denen keine Zirkulation stattfindet, so daß diese Leitungen bzw. Leitungsteile stehendes Wasser mit einer kritischen Temperatur enthalten.

Um den Gefährdungen, die insbesondere für die vorerwähnten Risikogruppen bestehen, durch Legionellen in Warmwasser zu begegnen, wird das warme Wasser mit Trinkwasserqualität in besonders gefährdeten Warmwasser-Zirkulationsnetzen, z.B. in Krankenhäusern, Altenheimen usw. auf über 50°C gehalten und kann bei Verkeimung des Trinkwassersystems in Einzelfällen oder periodisch auf 70°C bis 75°C aufgeheizt werden, um eine thermische Desinfektion durchzuführen.

Zur Durchführung eines hydraulischen Abgleichs werden in Warmwasser-Zirkulationssystemen thermostatisch regelnde Ventile der gattungsgemäßen Art, wie sie beispielsweise aus der DE 298 05 921.5 U1 der DE 198 34 151 C1 sowie der EP 1 167 841 A2 bekannt sind, eingesetzt, um den Wasser-Volumenstrom mit der gewünschten Zirkulationstemperatur gleichmäßig auf die einzelnen Zirkulationsstränge des Warmwasser-Zirkulationssystems zu verteilen. Derartige Regulierventile werden üblicherweise in jede Steigstrang-TWZ-Leitung (TWZ = Trinkwasser Zirkulation), und zwar kurz vor deren Einmünden in die Zirkulationssammelleitung, eingebaut. Die Regulierventile stellen das hydraulische Gleichgewicht der Zirkulationsstränge untereinander her, d.h., der Drucküberschuß der Zirkulationspumpe wird gleichmäßig durch die Regulierventile, die eine Drosselfunktion ausüben, abgebaut. Dabei stellen die Regulierventile in den zirkulationspumpennahen Rohrsträngen große Differenzdrücke bei kleinen Volumenströmen und in den hydraulisch ungünstigen, pumpenfernen Rohrsträngen kleine Drücke bei großen Volumenströmen ein. Auf diese Weise werden die Vorgaben der DVGW-Arbeitsblätter W551, W552 und W553 weitgehend befolgt, daß alle Warmwasserleitungen innerhalb des Systems gleichmäßig mit hochtemperiertem Trinkwasser von 55 bis 60°C durchströmt werden, so daß ein vermehrtes Wachstum von Keimen (Legionellen) in den Wasserleitungen unterbunden wird; und alle Wasserleitungen des Leitungsnetzes durch heißes Trinkwasser mit einer Temperatur über 70°C thermisch desinfiziert werden können.

Die Praxis hat gezeigt, daß in weitverzweigten Warmwasserversorgungsanlagen von Hotels, Krankenhäusern, Altenheimen und ähnlichen mehrstöckigen Gebäuden die Zirkulation des Warmwassers bis zu den einzelnen Zapfstellen in den verschiedenen Stockwerken der Gebäude gewährleistet werden muß. Der hydraulische Abgleich im Stockwerksbereich sowie in den Abgängen zu den Zapfstellen bzw. Naßzellen wird heute nur unzulänglich mit statischen Ventilen durchgeführt.

Der Erfindung liegt die Aufgabe zugrunde, ein Stockwerkregulierventil für Warmwasser-Zirkulationssysteme zu entwickeln, das eine optimale Zirkulation des Warmwassers bis zu den einzelnen Zapfstellen ermöglicht und sich durch eine hohe Regelgenauigkeit und eine einfache Konstruktion auszeichnet.

Diese Aufgabe wird erfindungsgemäß gelöst durch Stockwerkregulierventile gemäß den Patentansprüchen 1 und 18.

Die Unteransprüche beinhalten vorteilhafte und zweckmäßige Weiterbildungen der Erfindung.

Die erfindungsgemäßen Stockwerkregulierventile weisen folgende Vorteile auf:

Die durch die Warmwassertemperatur geregelten Stockwerkregulierventile, die als Unterputz- oder Aufputzventile eingesetzt werden können und für kleine Durchflußmengen ausgelegt sind, ermöglichen den hydraulischen Abgleich von sich verzweigenden Stockwerkszirkulationsleitungen im Stockwerksbereich durch eine optimale Zirkulation des Warmwassers bis zu den einzelnen Zapfstellen einer Warmwasserversorgungsanlage und zeichnen sich durch eine hohe Regelgenauigkeit aus, die dadurch erreicht wird, daß der Regulierkolben mit einem Regulierkegel für die Warmwasserdurchflußmenge in einen in das Ventilgehäuse einzusetzenden Ventileinsatz mit integriertem Ventilsitz eingebaut ist. Durch diese Ventilkonstruktion wird erreicht, daß der Regulierkolben mit dem Regulierkegel unabhängig von den Maßtoleranzen des Ventilgehäuses für die am Ventil voreingestellte Sollwerttemperatur von z.B. 57°C immer genau den gleichen Abstand zum Ventilsitz aufweist und damit bei der eingestellten Temperatur immer der gleiche kᵥ-Wert (Volumenstrom in m³/h bei 1 bar Druckverlust über dem Ventil) durch das Ventil erreicht wird. Ferner wird durch die Verwendung einfacher Bauteile eine hohe Betriebssicherheit der Regulierventile gewährleistet.

Die Erfindung ist nachstehend anhand von Zeichnungsfiguren erläutert, die folgendes zeigen:
- Fig. 1: eine Längsschnittdarstellung eines Stockwerkregulierventils,
- Fig. 2: eine Längsschnittdarstellung einer weiteren Ausführungsform des Stockwerkregulierventils,
- Fig. 3: das Schema einer Warmwasserversorgungsanlage für ein mehrstöckiges Gebäude,
- Fig. 4: eine schematische Grundrißdarstellung des in einem Stockwerk verlegten Leitungsnetzes der Warmwasserversorgungsanlage in sanitären Naßzellen mit verschiedenen Zapfstellen,
- Fig. 5: eine schematische Darstellung einer Naßzelle mit sanitären Einrichtungen und den entsprechenden Zapfstellen mit einem Stockwerkregulierventil als Unterputzarmatur und
- Fig. 6: eine schematische Darstellung einer Naßzelle mit sanitären Einrichtungen und den entsprechenden Zapfstellen mit einem in der Zwischendecke frei verlegten Stockwerkregulierventil.

Bei den beiden nachfolgend beschriebenen Ventilausführungen sind gleiche oder ähnliche Bauteile durch gleiche Bezugszeichen gekennzeichnet.

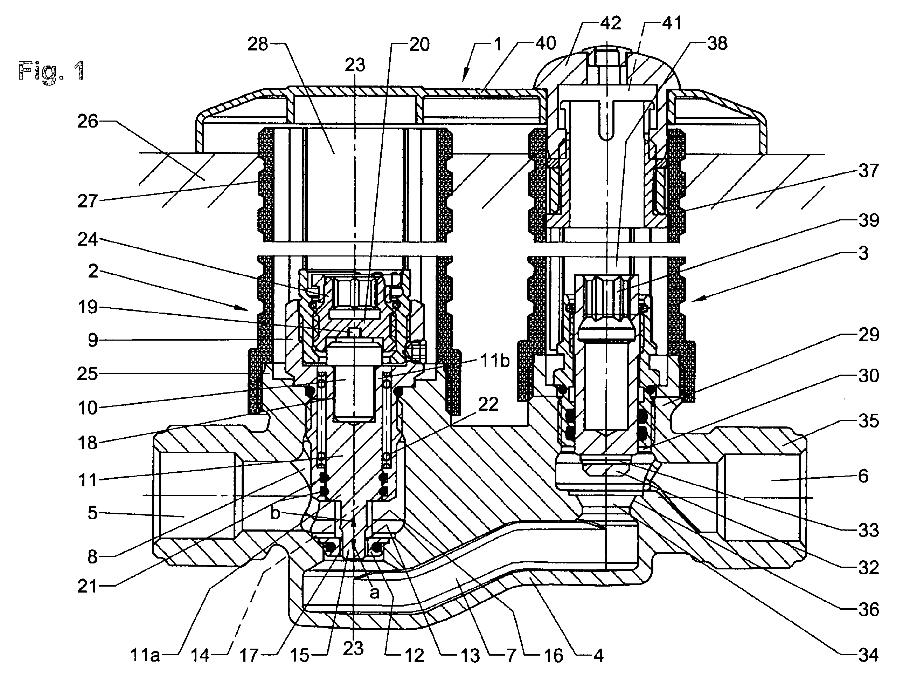

Das als Unterputzventil ausgebildete Stockwerkregulierventil 1 für Warmwasser-Zirkulationssysteme nach Figur 1 umfaßt ein durch die Warmwassertemperatur geregeltes, voreinstellbares Regulieroberteil 2 und ein diesem nachgeschaltetes, manuell betätigtes Absperr- und/oder Regulieroberteil 3, die in ein Ventilgehäuse 4 z.B. aus Edelstahl oder Rotguß mit einem Eingangskanal 5 und einem Ausgangskanal 6 eingebaut sind. Eingangs- und Ausgangskanal 5, 6 des Ventilgehäuses 4 sind durch einen Zwischenkanal 7 miteinander verbunden.

Das als Geradsitzventil ausgebildete Regulieroberteil 2 weist einen Regulierkanal 8 auf, der den Eingangskanal 5 mit dem Zwischenkanal 7 des Ventilgehäuses 4 verbindet und einen Ventileinsatz 9 aufnimmt.

Der Ventileinsatz 9 ist mit einem Thermostatelement 10 zum Verstellen eines Regulierkolbens 11 ausgestattet, der mit einem einteilig mit dem zylindrischen Ventileinsatz 9 ausgebildeten Ventilsitzring 12 zusammenwirkt, der abgedichtet in dem Regulierkanal 8 gehalten ist und eine Durchflußöffnung 13 zwischen Regulierkanal 8 und dem mit dem Ausgangskanal 6 des Ventilgehäuses 4 verbundenen Zwischenkanal 7 bildet. Der Regulierkolben 11 weist einen an seinem unteren Ende 11a angeformten Regulierkegel 15 auf, der einen als Drossel wirkenden Ringansatz 16 besitzt und in die Durchflußöffnung 13 des Ventilsitzringes 12 eintaucht.

Der freie Durchströmquerschnitt der Durchflußöffnung 13 des durch Längsstege 14 in dem Ventileinsatz 9 gehaltenen Ventilsitzringes 12 ist durch die Position des durch den Ventilsitzring 12 unter Bildung eines Ringspaltes 17 verschiebbaren Regulierkegels 15 des Regulierkolbens 11 regelbar. Der Regulierkolben 11 mit dem Regulierkegel 15 ist durch die von der Wassertemperatur abhängige Stellhubbewegung des Thermostatelementes 10 zwischen dem kᵥ-Maximalwert (maximaler Volumenstrom in m³/h bei 1 bar Druckverlust über dem Ventil) und dem kᵥ-Minimalwert (minimaler Volumenstrom in m³/h bei 1 bar Druckverlust über dem Ventil) bei einer in einem Temperaturbereich von beispielsweise 55°C bis 60°C liegenden Betriebstemperatur voreinstellbar.

Das Thermostatelement 10 ist in eine entsprechende Bohrung 18 in dem dem Ventilsitzring 12 abgewandten oberen Ende 11b des Regulierkolbens 11 eingesetzt und stützt sich mit einem aus- und einfahrbaren Stößel 19 gegen ein Widerlager 20 im Ventileinsatz 9 ab.

Der mittels Dichtringen 21 in dem Ventileinsatz 9 abgedichtete Regulierkolben 11 ist mittels einer entgegen der Stellkraft des Thermostatelementes 10 wirkenden Rückstellfeder 22 in dem Ventileinsatz 9 in Richtung der Längsachse 23-23 des Ventileinsatzes verstellbar abgestützt, und das Widerlager 20 des durch die Wassertemperatur gesteuerten Thermostatelementes 10 ist zur Voreinstellung der Ausgangsstellung des Regulierkolbens 11, bei der in der Endstellung des Regulierkolbens 11 eine minimale Wassermenge durch das Regulieroberteil 2 strömt, in Richtung der Längsachse 23-23 des Ventileinsatzes entgegen der Federkraft der Rückstellfeder 22 des Regulierkolbens 11 verstellbar.

Das zur Voreinstellung des Regulierkolbens 11 verstellbare Widerlager 20 des Thermostatelements 10 wird durch eine in dem Ventileinsatz 9 verschraubbare, z.B. als Innensechskantschraube ausgebildete Stellschraube 24 gebildet, die mit einem Steckschlüssel verschraubt wird. Die Stellschraube 24 zur Voreinstellung des Regulierkolbens 11 ist mit einer hörund/oder fühlbaren Rastereinstellung zur Voreinstellung der Temperatur ausgestattet.

Die Stellkraft des Thermostatelementes 10 ist größer als die Federkraft der Rückstellfeder 22 des Regulierkolbens 11.

An das Ventilgehäuse 4 ist koaxial zur Längsachse 23-23 des Ventileinsatzes 9 ein Anschlußstutzen 25 zum Anschrauben eines über das Mauerwerk 26 vorstehenden Unterputzschaftes 27 mit einem Zugangskanal 28 zur Voreinstellung der Ausgangsstellung des in dem Ventileinsatz 9 axial verstellbaren Regulierkolbens 11, für Wartungs- und Reparaturarbeiten und zur Ableitung des Wassers aus dem Mauerwerk 26 im Leckagefall angeformt.

An das Ventilgehäuse 4 ist ein weiterer Anschlußstutzen 29 mit einer Aufnahmeöffnung 30 für das in diese einschraubbare, manuell betätigte, als Geradsitzventil ausgebildete Absperrund/oder Regulieroberteil 3 mit einem verstellbaren Regulierkegel 32 mit Dichtring 33 zum Absperren und/oder Regulieren der Durchflußöffnung 34 eines im Ausgangskanal 6 des Auslaßstutzens 35 ausgebildeten Ventilsitzes 36 angeformt. Auf den Anschlußstutzen 29 für das Oberteil 31 des Absperr- und/oder Regulieroberteils 3 ist ein über das Mauerwerk 26 vorstehender Unterputzschaft 37 mit einem Zugangskanal 38 zum Verstellen des z.B. mit einem Innensechskant 39 versehenen, verschraubbaren Regulierkegels 32 des Absperr- und/oder Regulieroberteils 3 mittels eines Steckschlüssels, zum Aus- und Einbau des Oberteils 3 im Rahmen von Wartungs- und Reparaturarbeiten und zur Ableitung des Wassers aus dem Mauerwerk 26 im Leckagefall aufgeschraubt.

Die beiden Unterputzschäfte 27, 37 des Stockwerkregulierventils 1 werden mit einer auf das Mauerwerk 26 aufsetzbaren Rosette 40 hygienisch einwandfrei verschlossen, die eine Öffnung 41 über dem Absperroberteil 3 zur Aufnahme eines Bediengriffs oder einer Behördenkappe 42 aufweist.

Ferner besteht die Möglichkeit, die Rosette 40 mit einer zusätzlichen Öffnung über dem Regulieroberteil 2 zur Aufnahme eines Bediengriffes oder einer Behördenkappe zu versehen.

Das Stockwerkregulierventil arbeitet wie folgt:

Bei der Betriebstemperatur eines Warmwasser-Zirkulationssystems unterhalb der unteren Grenze des Betriebstemperaturbereiches steht der Regulierkolben 11 mit dem Regulierkegel 15 des durch die Wassertemperatur geregelten Regulieroberteils 2 des Stockwerkregulierventils 1 in der in Figur 1 dargestellten, voreingestellten Regulierstellung, in der bei der Offenstellung des dem Regulieroberteil 2 nachgeschalteten, manuell betätigten Absperroberteils 3 eine maximale Wassermenge durch das Stockwerkregulierventil 1 fließt. Bei Erreichen der Betriebstemperatur wird durch den Stellhub des Thermostatelementes 10 der Regulierkegel 15 des Regulierkolbens 11 in Pfeilrichtung a gegen die Federkraft der Rückstellfeder 22 durch den Ventilsitzring 12 nach unten bewegt und der durch den Ringspalt 17 des Ventilsitzringes 12 fließende Warmwasservolumenstrom wird durch den Ringansatz 16 des sich durch den Ventilsitzring 12 in Pfeilrichtung a bewegenden Regulierkegels 15 des Regulierkolbens 11 auf einen Minimalvolumenstrom gedrosselt.

Wenn sich das durch das Rohrleitungsnetz zirkulierende Warmwasser wieder bis unter die untere Grenze des Betriebstemperaturbereiches abkühlt, bewegt sich der Regulierkolben 11 mit dem Regulierkegel 15 unter Einwirkung der Federkraft der Rückstellfeder 22 in Pfeilrichtung b in die obere Ausgangsstellung zurück.

Das vorbeschriebene Stockwerkregulierventil kann ohne Unterputzschäfte als Aufputzventil z.B. in Zwischendecken oder Doppelböden von Gebäuden eingebaut werden. Ferner kann das Stockwerkregulierventil in einer vereinfachten Ausführung ohne das dem thermostatisch geregelten Regulieroberteil nachgeschaltete, manuell betätigte Absperr- und/oder Regulieroberteil hergestellt werden.

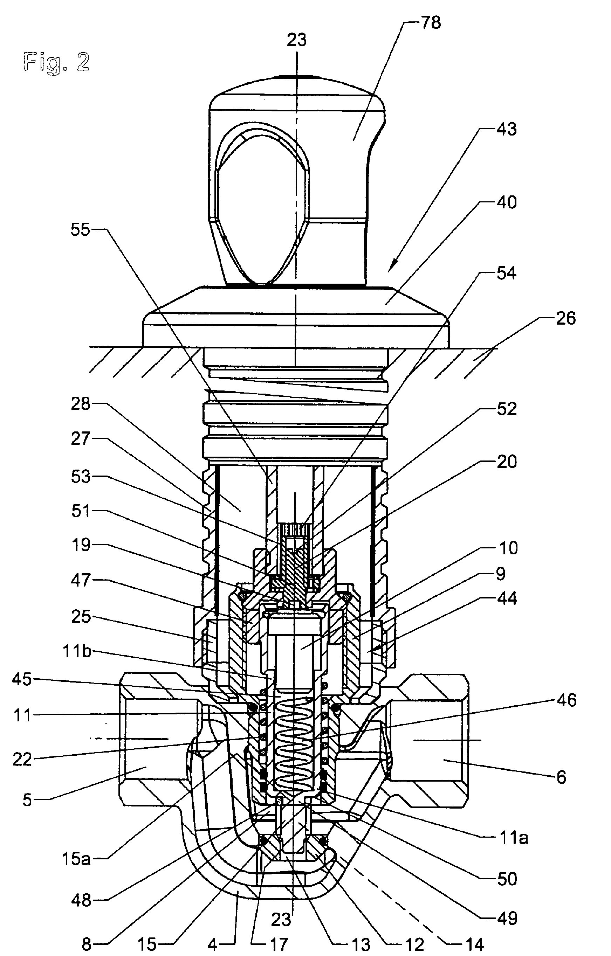

Das in Figur 2 dargestellte, als Unterputzventil ausgebildete Stockwerkregulierventil 43 enthält ein Oberteil 44 mit einer Regulier- und Absperrfunktion, das in einen Regulierkanal 8 des Ventilgehäuses 4 zwischen Eingangskanal 5 und Ausgangskanal 6 eingebaut ist.

Das Oberteil 44 weist einen Ventileinsatz 9 mit einem Thermostatelement 10 zum Verstellen eines Regulierkolbens 11 mit einem Regulier- und Schließkegel 15 auf, der mit einem mit dem Ventileinsatz 9 einteilig ausgebildeten Ventilsitzring 12 zusammenwirkt, der abgedichtet in dem Regulierkanal 8 gehalten ist und eine Durchflußöffnung 13 zwischen Eingangs- und Ausgangskanal 5, 6 des Ventilgehäuses 4 bildet. Der freie Strömungsquerschnitt der Durchflußöffnung 13 des durch Längsstege 14 in dem Ventileinsatz 9 gehaltenen Ventilsitzringes 12 ist durch die Position des durch den Ventilsitzring 12 unter Bildung eines Ringspaltes 17 verschiebbaren Regulierkegels 15 regelbar und der Regulierkegel 15 ist durch die von der Wassertemperatur abhängige Stellhubbewegung des Thermostatelementes 10 zwischen einer voreinstellbaren Ausgangsstellung zur Einstellung eines maximalen Volumenstroms (kᵥmax) bei einer Warmwassertemperatur von beispielsweise <55°C und zur Einstellung eines minimalen Volumenstroms (kᵥmin) bei einer Betriebstemperatur des Warmwassers von beispielsweise >57°C verstellbar.

Das Thermostatelement 10 ist in eine Sacklochbohrung 45 in den dem Ventilsitz 12 abgewandten Ende 11b des Regulierkolbens 11 eingesetzt und stützt sich einerseits gegen eine in die Sacklochbohrung 45 des Regulierkolbens 11 eingesetzte Überhubfeder 46 und andererseits mit einem aus- und einfahrbaren Stößel 19 gegen ein Widerlager 20 ab.

Das Widerlager 20 sitzt in einem oberen Gewindeformstück 47 und ist in diesem zur Voreinstellung der Sollwerttemperatur in Richtung der Längsachse 23-23 des Ventileinsatzes 9 entgegen der Federkraft einer in dem Ventileinsatz angeordneten, entgegen der Stellkraft des Thermostatelementes 10 wirkenden Rückstellfeder 22 des Regulierkolbens 11 verstellbar.

Zum Absperren des Stockwerkregulierventils 43 ist das Gewindeformstück 47 zusammen mit dem Regulierkolben 11 und dem in diesem sitzenden Thermostatelement 10 entgegen der Federkraft der Rückstellfeder 22 des Regulierkolbens 11 in Richtung der Längsachse 23-23 des Ventileinsatzes 9 bis zur Anlage eines Dichtringes 48, der in eine Ringnut 49 am oberen Ende 15a des in den Ventilsitzring 12 eintauchenden Regulierkegels 15 eingelegt ist und sich an einer Ringschulter 50 am unteren Ende 11a des Regulierkolbens 11 abstützt, an dem Ventilsitzring 12 verstellbar, wobei ein nach dem Absperren des Ventils 43 erfolgter Stellhub des Thermostatelementes 10 von der Überhubfeder 46 aufgenommen wird.

Die Federkraft der Überhubfeder 46 ist größer als die Federkraft der Rückstellfeder 22 des Regulierkolbens 11.

Das verstellbare Widerlager 20 für den Stößel 19 des Thermostatelementes 10 ist als Gewindestift 51 mit einem Schraubendreherschlitz 52 ausgebildet und der Gewindestift 51 ist formschlüssig mit einem Rastelement 53 verbunden, das in entsprechende Rastausnehmungen eines Rasterringes 54 des Gewindeformstücks 47 einrastet.

In das Gewindeformstück 47 ist eine Hohlspindel 55 konzentrisch zum verstellbaren Widerlager zum Verschrauben des Gewindeformstücks zusammen mit dem Regulierkolben 11 und dem Regulier- und Absperrkegel 15 in Richtung der Längsachse 23-23 des Ventileinsatzes 9 beim Absperren des Stockwerkregulierventils 43 eingesetzt.

Das Ventilgehäuse 4 der Unterputzausführung des Stockwerkregulierventils 43 weist einen Anschlußstutzen 25 zum Befestigen eines über das Mauerwerk 26 vorstehenden Unterputzschaftes 27 mit einem Zugangskanal 28 zur Voreinstellung der Ausgangsstellung des in dem Ventileinsatz 9 axial verstellbaren Regulierkolbens 11 mit dem Regulier- und Schließkegel 15, zum Absperren des Ventils 43 mittels der Hohlspindel 55, für Wartungs- und Reparaturarbeiten und zur Ableitung des Wassers aus dem Mauerwerk 26 im Leckagefall auf.

Der Unterputzschaft 27 des Stockwerkregulierventils 43 wird mit einer auf das Mauerwerk 26 aufsetzbaren Rosette 40 hygienisch dicht verschlossen, die eine Öffnung zur Aufnahme eines Bediengriffs 78 zum Drehen der Hohlspindel 55 für das Absperren und Öffnen des Stockwerkregulierventils 43 aufweist.

Die Regulier- bzw. Absperroberteile 2, 3, 44 der vorbeschriebenen Stockwerkregulierventile 1, 43 können eine Bohrung zur Aufnahme eines Thermometers oder eines Thermoelements zur Messung der Wassertemperatur aufweisen.

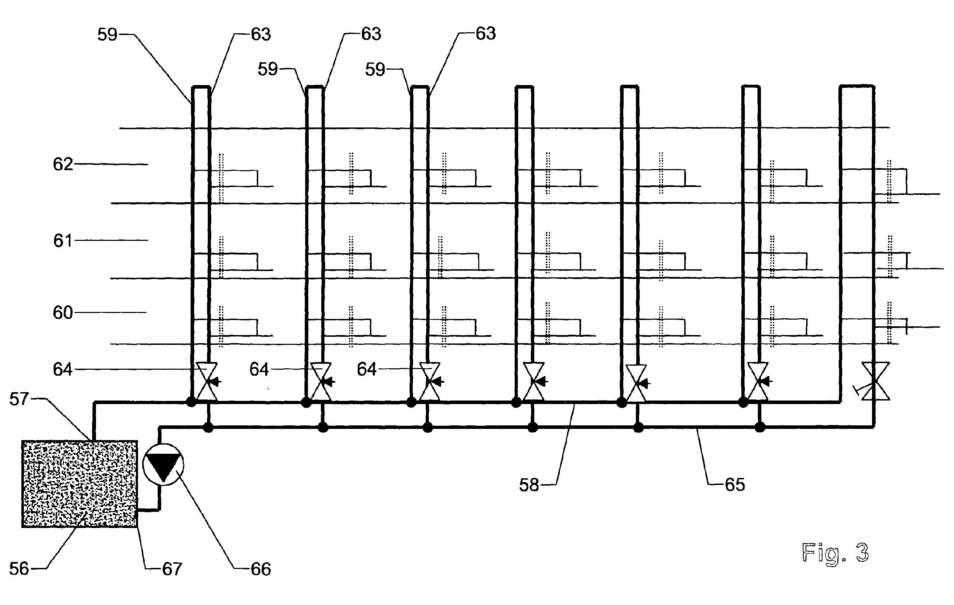

Das ausschnittsweise in Figur 3 dargestellte Schema einer Warmwasserversorgungsanlage für ein mehrstöckiges Gebäude zeigt einen Trinkwassererwärmer 56 mit einem TWW-Anschluß 57 (TWW = Trinkwasser Warm) für eine TWW-Leitung 58, von der Steigleitungen 59 zum Erdgeschoß 60 und zwei Stockwerken 61, 62 abzweigen. Die Steigleitungen 59 sind jeweils über eine parallel verlegte Steigstrang-TWZ-Leitung 63 (TWZ = Trinkwasser Zirkulation) mit einem eingebauten Regulierventil 64 für den hydraulischen Abgleich der Steigleitungen 59 mit einer Zirkulationssammelleitung 65 verbunden, in die eine Umwälzpumpe 66 eingebaut ist, die an den TWZ-Anschluß 67 des Trinkwassererwärmer 56 angeschlossen ist.

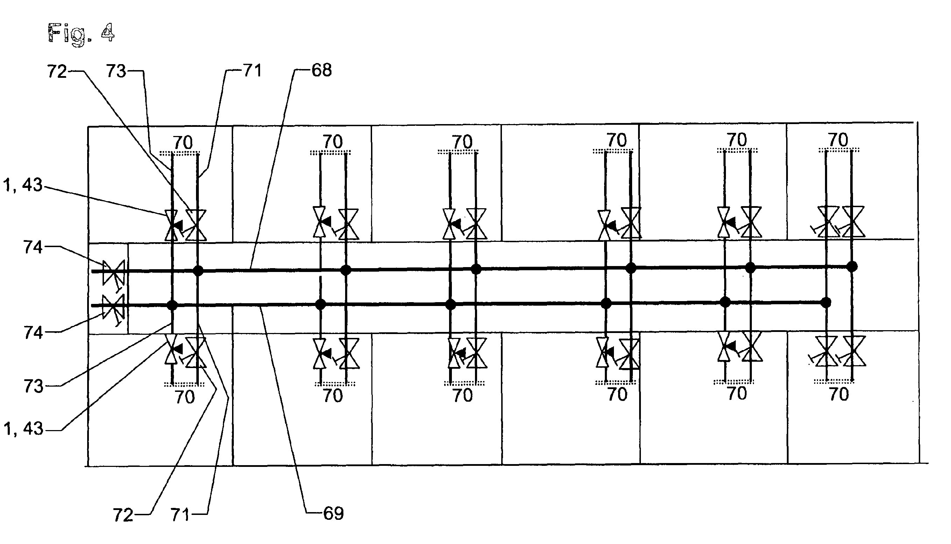

Das in Figur 4 schematisch dargestellte Leitungsnetz für die verschiedenen Wohnungen im Erdgeschoß 60 und den beiden Stockwerken 61, 62 eines mehrstöckigen Gebäudes umfaßt eine Stockwerk-TWW-Leitung 68, die an eine Steigleitung 59 angeschlossen ist, sowie eine Stockwerk-Zirkulationssammelleitung 69, die an die TWZ-Leitung 63 der Steigleitung 59 angeschlossen ist. Die verschiedenen Zapfstellen 70 einer Etagenwohnung sind jeweils über eine TWW-Leitung 71 mit einem eingebauten Absperrventil 72 an die Stockwerk-TWW-Leitung 68 und über eine TWZ-Leitung 73 mit einem eingebauten Stockwerkregulierventil 1 bzw. 43 für den hydraulischen Abgleich der TWW-Leitungen 71 der verschiedenen Zapfstellen 70 untereinander an die Stockwerk-Zirkulationssammelleitung 69 angeschlossen. Die Stockwerk-TWW-Leitung 68 und die Stockwerk-Zirkulationssammelleitung 69 einer Etagenwohnung können jeweils mit einem Absperrventil 74 abgesperrt werden.

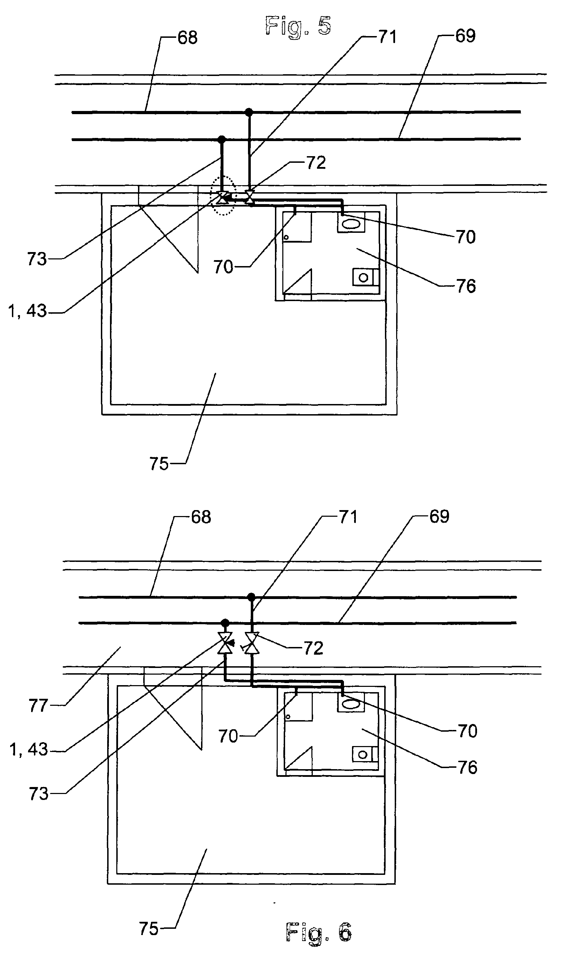

Figur 5 zeigt einen schematischen Grundriß eines Zimmers 75 in einem Stockwerk eines Gebäudes mit einer sanitären Naßzelle 76 mit zwei Zapfstellen 70 und einer Stockwerkszirkulation bis zu den Zapfstellen, wobei das Absperrventil 72 in der TWW-Leitung 71 und das Stockwerkregulierventil 1 bzw. 43 in der TWZ-Leitung 73 als Unterputzventile ausgebildet sind.

Bei dem in Figur 6 dargestellten Zimmer 75 sind Absperrventil 72 und Stockwerkregulierventil 1 bzw. 43 als Aufputzventile in eine Zwischendecke 77 freiliegend eingebaut.

## Patentansprüche

1. Stockwerkregulierventil für Warmwasser-Zirkulationssysteme, mit einem Ventilgehäuse, in das ein durch die Wassertemperatur gesteuertes Thermostatelement als Stellglied für ein Regelglied eingebaut ist, das mit einem Ventilsitz mit einer Durchflußöffnung zwischen Eingangs- und Ausgangskanal des Ventilgehäuses zur Regelung der Wasserdurchflußmenge zusammenwirkt, sowie mit einer Stellvorrichtung zur Voreinstellung des Regelgliedes, **gekennzeichnet durch** eine Ausbildung als Unterputz- oder Aufputzventil mit einem in einen Regulierkanal (8) des Ventilgehäuses (4) zwischen Eingangskanal (5) und Ausgangskanal (6) oder einem Zwischenkanal (7) zum Ausgangskanal (6) eingebauten Regulieroberteil (2) mit einem Ventileinsatz (9), der ein Thermostatelement (10) zum Verstellen eines Regulierkolbens (11) mit einem am unteren Ende (11a) angeformten Regulierkegel (15) aufweist, der einen als Drossel wirkenden Ringansatz (16) besitzt und in die Durchflußöffnung (13) eines einteilig mit dem zylindrischen Ventileinsatz (9) ausgebildeten Ventilsitzringes (12) eintaucht, der abgedichtet in dem Regulierkanal (8) gehalten ist und eine Durchflußöffnung (13) zwischen Eingangs- und Ausgangskanal (5, 6) oder dem Zwischenkanal (7) zum Ausgangskanal (6) bildet, wobei der freie Strömungsquerschnitt der Durchflußöffnung (13) des Ventilsitzringes (12) **durch** die Position des **durch** den Ventilsitzring (12) unter Bildung eines Ringspaltes (17) verschiebbaren Regulierkegels (15) regelbar ist und der Regulierkegel (15) **durch** die von der Wassertemperatur abhängige Stellhubbewegung des Thermostatelementes (10) zwischen einer voreinstellbaren Ausgangsstellung zur Einstellung eines maximalen Volumenstroms (kᵥmax) bei einer Warmwassertemperatur von beispielsweise <55°C und zur Einstellung eines minimalen Volumenstroms (kᵥmin) bei einer Betriebstemperatur des Warmwassers von beispielsweise >57°C verstellbar ist, sowie mit einem Anschlußstutzen (25) des Ventilgehäuses (4) der Unterputzventilausführung zum Befestigen eines über das Mauerwerk (26) vorstehenden Unterputzschaftes (27) mit einem Zugangskanal (28) zur Voreinstellung der Ausgangsstellung des in dem Ventileinsatz (9) axial verstellbaren Regulierkolbens (11) mit Regulierkegel (15), für Wartungs- und Reparaturarbeiten und zur Ableitung des Wassers aus dem Mauerwerk (26) im Leckagefall.

2. Regulierventil nach Anspruch 1, **gekennzeichnet durch** eine Ausbildung als Geradsitzventil.

3. Regulierventil nach Anspruch 1 und 2, **dadurch gekennzeichnet, daß** das Thermostatelement (10) in eine entsprechende Bohrung (18) in dem dem Ventilsitzring (12) abgewandten Ende (11b) des Regulierkolbens (11) des Ventileinsatzes (9) eingesetzt ist und sich mit einem aus- und einfahrbaren Stößel (19) gegen ein Widerlager (20) im Ventileinsatz (9) abstützt oder umgekehrt das Thermostatelement (10) mit dem Stößel (19) in eine entsprechende Bohrung in dem dem Ventilsitzring (12) abgewandten Ende (11b) des Regulierkolbens (11) eingesetzt ist und sich mit dem anderen Ende gegen das Widerlager (20) abstützt.

4. Regulierventil nach einem der Ansprüche 1 bis 3, **dadurch gekennzeichnet, daß** der Regulierkolben (11) mittels einer entgegen der Stellkraft des Thermostatelementes (10) wirkenden Rückstellfeder (22) in dem Ventileinsatz (9) in Richtung der Längsachse (23-23) desselben verstellbar abgestützt ist und das Widerlager (20) des durch die Wassertemperatur gesteuerten Thermostatelementes (10) zur Voreinstellung der Sollwerttemperatur in Richtung der Längsachse (23-23) des Ventileinsatzes (9) entgegen der Federkraft der Rückstellfeder (22) des Regulierkolbens (11) verstellbar ist.

5. Regulierventil nach einem der Ansprüche 1 bis 4, **dadurch gekennzeichnet, daß** das verstellbare Widerlager (20) des Thermostatelementes (10) durch eine in dem Ventileinsatz (9) verschraubbare Stellschraube (24) gebildet wird.

6. Regulierventil nach Anspruch 5, **dadurch gekennzeichnet, daß** die Stellschraube (24) mit innen oder außen liegenden Schlüsselflächen zur Betätigung mittels eines entsprechenden Steckschlüssels ausgebildet ist.

7. Regulierventil nach einem der Ansprüche 1 bis 6, **dadurch gekennzeichnet, daß** die Stellschraube (24) zur Voreinstellung des Regulierkolbens (11) mit dem Regulierkegel (15) eine hörund/oder fühlbare Rastereinstellung zur Voreinstellung der Sollwerttemperatur aufweist.

8. Regulierventil nach einem der Ansprüche 1 bis 7, **dadurch gekennzeichnet, daß** die Stellkraft des Thermostatelementes (10) größer als die Federkraft der Rückstellfeder (22) des Regulierkolbens (11) ist.

9. Regulierventil nach einem der Ansprüche 1 bis 8, **dadurch gekennzeichnet, daß** der Ventilsitzring (12) durch Längsstege (14) in dem Ventileinsatz (9) gehalten ist.

10. Regulierventil nach einem der Ansprüche 1 bis 9, **dadurch gekennzeichnet, daß** der Regulierkolben (11) mittels Dichtringen (21) in dem Ventileinsatz (9) abgedichtet ist.

11. Regulierventil nach einem der Ansprüche 1 bis 10, **gekennzeichnet durch** den Einbau zusammen mit einem manuell betätigten, nachgeschalteten Absperr- und/oder Regulieroberteil (3) in einem Ventilgehäuse (4) mit einem Eingangs- und einem Ausgangskanal (5, 6), die **durch** einen Zwischenkanal (7) miteinander verbunden sind.

12. Regulierventil nach einem der Ansprüche 1 bis 11, **dadurch gekennzeichnet, daß** an das Ventilgehäuse (4) ein Anschlußstutzen (29) mit einer Aufnahmeöffnung (30) für das als Geradsitzventil ausgebildete Absperr- und/oder Regulieroberteil (3) mit einem verstellbaren Regulierkegel (32) mit Dichtring (33) zum Absperren und/oder Regulieren der Durchflußöffnung (34) eines im Ausgangskanal (6) des Auslaßstutzens (35) des Ventilgehäuses (4) ausgebildeten Ventilsitzes (36) angeordnet ist.

13. Regulierventil nach Anspruch 11 und 12, **gekennzeichnet durch** einen bei der Unterputzventilausführung an dem Anschlußstutzen (29) des Ventilgehäuses (4) befestigten, über das Mauerwerk (26) vorstehenden Unterputzschaft (37) mit einem Zugangskanal (38) zum Verstellen des Regulierkegels (32) des Absperr- und/oder Regulieroberteils (3) und für Wartungs- und Reparaturarbeiten.

14. Regulierventil nach einem der Ansprüche 1 bis 13, **gekennzeichnet durch** eine abnehmbare Rosette (40) zum hygienisch einwandfreien Verschließen des bzw. der über das Mauerwerk (26) vorstehenden Unterputzschaftes (27) bzw. Unterputzschäfte (27, 37) des (2) bzw. der Regulieroberteile (2, 3).

15. Regulierventil nach Anspruch 14, **dadurch gekennzeichnet, daß** die Rosette (40) eine Öffnung (41) über dem Absperroberteil (3) zur Aufnahme eines Bediengriffs oder eine Behördenkappe (42) aufweist.

16. Regulierventil nach Anspruch 14, **dadurch gekennzeichnet, daß** die Rosette (40) eine Öffnung (41) über dem Absperroberteil (3) zur Aufnahme eines Bediengriffs oder eine Behördenkappe (42) und eine Öffnung über dem Regulieroberteil (2) zur Aufnahme einer Verschlußkappe aufweist.

17. Stockwerkregulierventil nach dem Oberbegriff des Anspruchs 1, **gekennzeichnet durch** eine Ausbildung als Unterputzoder Aufputzventil mit einem in einen Regulierkanal (8) des Ventilgehäuses (4) zwischen Eingangskanal (5) und Ausgangskanal (6) eingebauten Oberteil (44) mit einer Regulier- und Absperrfunktion.

18. Regulierventil nach Anspruch 17, **dadurch gekennzeichnet, daß** das Oberteil (44) einen Ventileinsatz (9) mit einem Thermostatelement (10) zum Verstellen eines Regulierkolbens (11) mit einem Regulier- und Schließkegel (15) aufweist, der mit einem mit dem Ventileinsatz (9) einteilig ausgebildeten Ventilsitzring (12) zusammenwirkt, der abgedichtet in dem Regulierkanal (8) gehalten ist und eine Durchflußöffnung (13) zwischen Eingangs- und Ausgangskanal (5, 6) bildet, wobei der freie Strömungsquerschnitt der Durchflußöffnung (13) des Ventilsitzringes (12) durch die Position des durch den Ventilsitzring (12) unter Bildung eines Ringspaltes (17) verschiebbaren Regulierkegels (15) regelbar ist und der Regulierkegel (15) durch die von der Wassertemperatur abhängige Stellhubbewegung des Thermostatelementes (10) zwischen einer voreinstellbaren Ausgangsstellung zur Einstellung eines maximalen Volumenstroms (kᵥmax) bei einer Warmwassertemperatur von beispielsweise <55°C und zur Einstellung eines minimalen Volumenstroms (kᵥmin) bei einer Betriebstemperatur des Warmwassers von beispielsweise >57°C verstellbar ist, und daß das Thermostatelement (10) in eine Sacklochbohrung (45) in dem dem Ventilsitzring (12) abgewandten Ende (11b) des Regulierkolbens (11) eingesetzt ist, sich einerseits gegen eine in die Sacklochbohrung (45) des Regulierkolbens (11) eingesetzte Überhubfeder (46) und andererseits mit einem aus- und einfahrbaren Stößel (19) gegen ein Widerlager (20) abstützt, das in einem oberen Gewindeformstück (47) sitzt und in diesem zur Voreinstellung der Sollwerttemperatur in Richtung der Längsachse (23-23) des Ventileinsatzes (9) entgegen der Federkraft einer in dem Ventileinsatz angeordneten, entgegen der Stellkraft des Thermostatelementes (10) wirkenden Rückstellfeder (22) des Regulierkolbens (11) verstellbar ist, wobei zum Absperren des Regulierventils (43) das Gewindeformstück (47) zusammen mit dem Regulierkolben (11) und dem in diesem sitzenden Thermostatelement (10) entgegen der Federkraft der Rückstellfeder (22) des Regulierkolbens (11) in Richtung der Längsachse (23-23) des Ventileinsatzes (9) bis zur Anlage eines Dichtringes (48), der in eine Ringnut (49) am oberen Ende (15a) des in den Ventilsitzring (12) eintauchenden Regulierkegels (15) eingelegt ist und sich an einer Ringschulter (50) am unteren Ende (11a) des Regulierkolbens (11) abstützt, an dem Ventilsitzring (12) verstellbar ist, wobei ein nach dem Absperren des Ventils (43) erfolgender Stellhub des Thermostatelementes (10) von der Überhubfeder (46) aufgenommen wird.

19. Regulierventil nach Anspruch 17 und 18, **dadurch gekennzeichnet, daß** die Federkraft der Überhubfeder (46) größer als die Federkraft der Rückstellfeder (22) des Regulierkolbens (11) ist.

20. Regulierventil nach einem der Ansprüche 17 bis 19, **dadurch gekennzeichnet, daß** das verstellbare Widerlager (20) für den Stößel (19) des Thermostatelementes (10) als Gewindestift (51) mit einem Schraubendreherschlitz (52) ausgebildet ist.

21. Regulierventil nach Anspruch 20, **dadurch gekennzeichnet, daß** der Gewindestift (51) formschlüssig mit einem Rastelement (53) verbunden ist, das in entsprechende Rastausnehmungen eines Rasterringes (54) des Gewindeformstücks (47) einrastet.

22. Regulierventil nach einem der Ansprüche 17 bis 21, **gekennzeichnet durch** eine konzentrisch zum verstellbaren Widerlager (20) in das Gewindeformstück (47) eingesetzte Hohlspindel (55) zum Verschrauben des Gewindeformstücks zusammen mit dem Regulierkolben (11) und dem Regulier- und Absperrkegel (15) in Richtung der Längsachse (23-23) des Ventileinsatzes (9) beim Absperren und Öffnen des Ventils (43).

23. Regulierventil nach einem der Ansprüche 17 bis 22, **dadurch gekennzeichnet, daß** das Ventilgehäuse (4) der Unterputzausführung einen Anschlußstutzen (25) zum Befestigen eines über das Mauerwerk (26) vorstehenden Unterputzschaftes (27) mit einem Zugangskanal (28) zur Voreinstellung der Ausgangsstellung des in dem Ventileinsatz (9) axial verstellbaren Regulierkolbens (11) mit dem Regulier- und Schließkegel (15), zum Absperren und Öffnen des Ventils (43) mittels der Hohlspindel (55), für Wartungs- und Reparaturarbeiten und zur Ableitung des Wassers aus dem Mauerwerk (26) im Leckagefall aufweist.

24. Regulierventil nach einem der Ansprüche 1 bis 16, **dadurch gekennzeichnet, daß** das Absperroberteil (3) des zwei Oberteile (2, 3) aufweisenden Stockwerkregulierventils (1) eine Bohrung zur Aufnahme eines Thermometers oder eines Thermoelements zur Messung der Wassertemperatur aufweist.

25. Regulierventil nach einem der Ansprüche 17 bis 23, **dadurch gekennzeichnet, daß** das Regulier- und Absperroberteil (44) des einteiligen Stockwerkregulierventils (43) eine Bohrung zur Aufnahme eines Thermometers oder eines Thermoelementes zur Messung der Wassertemperatur aufweist.
